# EUROPEAN PATENT SPECIFICATION

(11) **EP 1 614 268 B1**
(45) Date of publication and mention of the grant of the patent: **13.06.2007**
(21) Application number: 04726358.7
(22) Date of filing: 07.04.2004
(51) Int. Cl.: H04L 29/06, H04Q 11/00

(54) **A TRANSPONDER READER CAPABLE OF READING TRANSPONDERS HAVING DIFFERENT SIGNALLING PROTOCOLS**
TRANSPONDERLESER MIT DER FÄHIGKEIT ZUM LESEN VON TRANSPONDERN MIT VERSCHIEDENEN ZEICHENGABEPROTOKOLLEN
LECTEUR DE TRANSPONDEURS CAPABLE DE LIRE DES TRANSPONDEURS COMPORTANT DES PROTOCOLES DE SIGNALISATION DIFFERENTS

(30) Priority: 14.04.2003 SE 0301096
(43) Date of publication of application: 11.01.2006
(73) Proprietor: DeLaval Holding AB, 147 21 Tumba (SE)
(72) Inventor: SOLBERG, Inga-Lill, S-141 70 Huddinge (SE); CARLSSON, Björn c/o Gerd Eriksson, S-712 91 Hällefors (SE)
(74) Representative: Kossmann, Jan Henrik
(86) International application number: PCT/SE2004/000550
(87) International publication number: WO 2004/091169

(56) References cited:
- WO-A1-02/19251
- WO-A2-00/43803

## Description

### TECHNICAL FIELD

The present invention relates to a transponder reader and a method therefore. More specifically the present invention relates to a transponder reader capable of reading transponders having different signalling protocols.

### BACKGROUND OF THE INVENTION

Transponders were originally electronic circuits that were attached to some item whose position or presence was to be determined. The transponder functioned by replying to an interrogation request received from an interrogator, or transponder reader, either by returning some data from the transponder such as an identity code or the value of a measurement, or returning the original properties of the signal received from the interrogator with virtually zero time delay, thereby allowing ranging measurements based on time of flight. As the interrogation signal is generally very powerful, and the returned signal is relatively weak, the returned signal would be swamped in the presence of the interrogation signal.

The functioning of the transponder was therefore to move some properties of the returned signal from that of the interrogation signal so that both could be detected simultaneously without the one swamping the other. The most common property to change is the transmission frequency meaning that the transponder might receive the interrogation frequency at one frequency, and respond on another frequency that is separated sufficiently with regard to frequency so that both may be detected simultaneously.

Transponder systems have recently started to become major players in the field of electronic identification. Within this application, it is necessary to make the transponders as cheap as possible, and rather to build the sophistication into the readers. This lack of sophistication generally means that changing the transmission frequency is no longer an option, as the frequency translation needs expensive and complex tuned circuitry. Instead the transponders have given up the ranging ability and rather time slice the communications channel with the interrogator. Here the interrogator (called a reader) sends an interrogation signal for a limited time. The transponder receives the signal and waits for its completion, and then responds on the same frequency with its identity and data code.

The devices are sometimes called transponders and are also sometimes called *tags*, because their end application eventually will be the tagging of goods or animals.

RFID stands for *radio frequency identification.* It is a widely varied collection of technologies for various applications, ranging from the high-speed reading of railway containers to applications in retail that can be regarded as a potential successor to the bar-coding technologies in use today to identification of animals in farms. RFID is based around radio or electromagnetic propagation. This has the ability to allow energy to penetrate certain goods and read a tag that is not visible thereby to identify those goods remotely, either in the form of an identity code or more simply that something is present (EAS). Different frequencies of the radio system result in different reading ranges and properties of the system.

Commonly available tags have an operating frequency in the range from 60kHz to 5.8GHz depending on application. In operation one can generally say that there are three different types of technologies being implemented. They are:
- Magnetic based RFID technologies
- EAS based technologies
- Electric field based RFID technologies

Electric field coupled transponders generally provide vastly increased ranges over their magnetic counterparts. Rather than being limited to the ranges of the lines of force emitting from a magnetic field generator, they use the electric field propagation properties of radio communication to convey energy and data from the reader to the transponder and data from the transponder to the reader.

Electric field propagation requires antenna systems that are typically half a wavelength of the operating frequency in size.(150cm at 100MHz,15 cm at 1GHz, 5 cm at 2.5Ghz and 2.5cm at 5.8Ghz). This causes practical limits to how low a frequency to start using E-field propagation methods due to the size of the antenna.

Higher operating frequencies require more expensive components and loose the ability to transfer energy at a rate of the inverse of the wavelength squared.

In addition, the energy density of a signal radiated using electric field coupling, decreases as the inverse of the distance squared between the source and the transponder. Whereas sensitive receivers can compensate for this loss of energy for the data communications over long distances, passive transponders which use the reader's energising field as a source of power are practically limited to maybe ten meters (say at 400 MHz). Beyond that distance (which reduces drastically with increased frequency to less than 1 meter at 2.5GHz) it is necessary for the tags to use an external battery as a source of power.

Electric field tags are available in many different configurations and price ranges, particularly dependant on the complexity of the transponder. If the transponder is a read/write transponder and is required to operate beyond the range of passive transponders, the receiver circuitry onboard can be expensive and difficult to construct particularly if frequency stability is needed with temperature.

However the invention of the backscatter modulation principle at Lawrence Livermore Laboratories in the 1960s and the skills of semiconductor designers to shrink all features into cheap integrated circuits, has meant that electric field type tags in a read only mode can be made extremely cheaply, most probably for less than 10 US cents in high volume. Such a tag would be passive, have no onboard tuned circuits, be read only, consist of a single integrated circuit and a simple antenna, would operate at any of a range of frequencies, be temperature insensitive, and would broadcast a large data value when illuminated by a reader's energising field. In such a system the reader is complex because it provides the frequency stability, the energy of the system, and the receiver selectivity to receive the weak return communications, but the tags are very cheap. This is ideal for the situations where there is one reader and many tags, such in large herds of farm animals.

Electric field tags need to operate in an ordered spectrum management system as their radiated energy (particularly from the reader) can be detected by other sensitive receivers far away and cause possible interference.

Recent developments in passive tag technology see the amount of power needed to power up the tag dropping dramatically. The reader radiates energy from its transmit antenna, some of which is collected by the tag in an area around its antenna called the "antenna's aperture". The size of this area is dependant upon the characteristics of the tag antenna and the operating frequency of the system, (e.g. a 915MHz dipole has a 134cm² aperture). Traditionally a 5 volt logic circuit in a transponder would need 55 milliwatts of RF energy to operate while recent developments see this amount of power dropping to less than 1 milliwatt, thereby dramatically reducing the power needed by the reader and increasing the range over which passive transponders can operate effectively.

A separate category also exists of "active" tags (battery powered). These tags are "beacon" tags, that is they are not interrogated by a reader, but wake themselves up from a low power "sleep mode" periodically and broadcast their identity before returning to "sleep mode". By broadcasting on a fixed frequency, a sensitive receiver tuned to that frequency and within close proximity to the tag will receive the identity message. This type of transponder offers ranges up to hundreds of meters, but is not suited for situations where the location of a tag is being determined to a couple of meters range, or where very many tags are present in the reader zone. Encryption technology has also been added to these systems to stop unwanted tags being accepted as valid codes by the reader.

Despite the hurdles, the greater range, higher data rates and new technologies make these transponders suitable for a great number of applications.

As can be understood from the description of prior art above a number of different transponder systems or schemes are present and more are continuously developed. Most of these systems continue to push intelligence towards the reader to be able to produce simple and cheap transponders or tags. It would thus be beneficial if a reader could be designed to handle transponders from several different systems without expensive hardware modification and preferably in a dynamic manner.

WO-A-0 219 251 (D1) an WO-A-0 043 803 (D2) relate to different aspects of identification devices. D1 is concerned with overcoming problems related to interference occurring between identification devices. D2 is related to means for optimizing the use of a common communication medium among identification devices.

None of D1 and D2 is concerned with problems related to using different types of identification devices.

### SUMMURY OF THE INVENTION

It is a main object of the present invention to provide such apparatus and method that at least alleviate the above problems.

It is in this respect a particular object of the invention to provide such an apparatus and method that can in a simple and cost-effective way read transponders from different systems implementing different communication protocols.

It is still a further object of the invention to provide such apparatus and method that can read transponders from different systems implementing different communication protocols in a dynamic manner.

These objects among others are, according to a first aspect of the present invention, attained by a transponder reader arranged to read data from transponders, wherein said transponders send data according to one transponder signalling protocol. The transponder signalling protocol may be selected from a number of different transponder signalling protocols.

Since the reader is designed to recognise transponders or tags from different systems, one reader may handle herds of animals wherein different animals wear tags from different transponder systems.

The transponder reader comprises an antenna means for sending a first analogue signal to one of said transponders and receiving a second analogue signal from said transponder, said transponder reader further comprises means for analysing, .e.g. demodulating, detecting, decode and transmitting said signal received by said antenna means to post-processing means.

The first analogue signal is the signal to energise a passive transponder, or to activate a semi-passive transponder. The first analogue signal is occasionally denoted activation signal. The first analogue signal may be continuous or intermittent for full-duplex and half-duplex systems, respectively. The second analogue signal is the signal sent from the transponder containing identification information to be deduced by the reader using demodulation, detection and decoding, to be described later. The reader may then send the information to post-processing means such as a database for storing the information.

The transponder reader comprises a digital processing means, an analogue to digital converter arranged to receive said second analogue signal from said antenna means, convert said second analogue signal to a first digital signal and supply said first digital signal to said digital processing means. The digital processing means comprises analysing means e.g. demodulating, detecting and decoding means arranged to demodulate, detect and decode digital signals received according to at least two different transponder signalling protocols, and the digital processing means receives, demodulates, detects and decodes said first digital signal and then transmits said decoded signal to said post-processing means.

By transforming the received signal to the digital domain, digital processing means can be utilised to process the digital signal by any appropriate method, that is, according to one selected protocol from a multitude of protocols.

These objects among others are, according to a second aspect of the present invention, attained by a method for reading read data from transponders, wherein each of said transponder send data according to one transponder signalling protocols, the transponder signalling protocol may be selected from a number of different transponder signalling protocols.

The method comprises sending a first analogue signal to one of said transponders and receiving a second analogue signal from said transponders using an antenna means, demodulating, detecting, and decoding said signal received by said antenna means and sending said signal to post-processing means.

The method is further characterised in the steps of converting said second analogue signal from the analogue domain to a first digital signal in the digital domain and supplying said first digital signal to digital processing means, wherein said digital processing means comprises demodulating, detecting and decoding means arranged to demodulate, detect and decode digital signals received according to at least two different transponder signalling protocols. The method continues to demodulate, detect and decode said first digital signal according to a selected transponder system and transmit said decoded signal to said post-processing means.

According to a preferred embodiment the antenna means comprises means for controlling the antenna characteristics and a digital interface for receiving and transmitting digital messages from said digital processing means. The antenna means controls said antenna characteristics in dependence of said received digital messages, and/or transmits digital messages relating to the antenna characteristics to said digital processing means.

By this arrangement the antenna characteristics may be controlled and adjusted to the circumstances prevailing. For instance may the amplification be tuned in dependence of the specific transponders used or the expected distance from the reader for the specific application of the transponder reader.

In the application for identifying lactating animals in a milking stall it is common that more than one transponder reader are positioned in relatively close proximity. In these cases the readers may disturb each other in a number of different ways. The antenna characteristics may then be controlled and adjusted to minimize the disturbances from the second reader during reading of the transponder as well as to disturb the second reader to a minimal extend when energizing transponders. By controlling the phase of the activation signal for each transponder reader so that they are coherent, minimal interference will occur between the transponder readers.

For instance may the transponder reader set antenna characteristics in dependence of detected environmental characteristics so as to achieve optimal signalling detection quality in relation to the electromagnetic environment.

According to one embodiment of the invention the protocols can be half-duplex protocols, full-duplex protocols or proprietor protocols. By designing a transponder reader according to the invention it is possible to have one single reader, which may be used for different protocols.

According to one embodiment of the transponder reader according to the invention the digital processing means supply second digital signals to a digital-to-analogue converter for converting said second digital signal to said first analogue signal, and the digital-to-analogue converter supplies said first analogue signal to the antenna means for transmission. Thus the digital processing means may control the characteristics of the energising signal sent from the antenna for energizing transponder. This may for instance be utilised for sending control signals to transponders or simply to change the frequency of the energising signal (activation signal).

According to yet a further embodiment of the invention the digital processing means comprises means for demodulating a signal according to several different methods. These may be implemented as different blocks or may be different parts of the same block in the digital processing means. The digital processing means may select which demodulating method to be used in different ways. In one embodiment the selection is made automatically and dynamically so that the digital processing means selects the method, which is best according to a specific criteria. According to another embodiment an operator selects which method to use.

According to yet a further embodiment of the invention the digital processing means comprises means for detection of symbols from said demodulated digital signal and means for decoding symbols from said detected symbols according to several schemes. These may be implemented as different blocks or may be different parts of the same block in the digital processing means.

Since the digital processing means comprises several different demodulation, detection and decoding means the transponder reader is very flexible and is able to read different transponders.

The transponder reader may select the demodulating, detection, and decoding means that produces the best signal detection quality. Decoding may be simple CRC.

According to another embodiment of the invention, where a full-duplex protocol is used the transponder reader may comprise means for subtracting the first analogue signal from the second analogue signal to remove the contribution from the first analogue signal, transmitted by the antenna from the reception of said second analogue signal received by the antenna. The first analogue signal may be boosted and/or delayed before subtraction. By this arrangement a more prominent response signal can be received from the transponder since in full-duplex systems the energizing signal, i.e. the first analogue signal, is transmitted continuously, i.e. even at the reception of the signal from the transponder. Since the first analogue signal is stronger, i.e. has higher amplitude, than the second signal, the second signal may drown if the first signal is not subtracted.

According to one embodiment of the invention the transponder reader comprises means for deciding which transponder signalling protocols that said transponder is using. This may be performed in different ways. For instance may the transponder reader read a first transponder in a start up sequence and that said transponder reader then assumes that all subsequentially read transponders are working according to said detected protocol or an operator may select the appropriate transponder signalling protocol. As an alternative the transponder reader may decide dynamically, for each transponder, which protocol to be used. This decision may be based on, for instance the detection rate or signal-to-noise ratio.

Further characteristics of the invention and advantages thereof will be evident from the following detailed description of embodiments of the invention.

### BRIEF DESCRIPTION OF THE DRAWINGS

The present invention will become more fully understood from the detailed description of embodiments of the present invention given herein below and the accompanying Figs. 1 to 10, which are given by way of illustration only, and thus are not limitative of the present invention.
Figure 1 shows a schematic side view of a transponder reader system according to the present invention.
Figure 2 shows a block diagram of a preferred embodiment according to the present invention.
Figure 3 shows a block diagram of the interface between the antenna means and the processing means in greater detail.
Figure 4 shows a block diagram of the interface between the antenna means and the processing means in greater detail.
Figure 5 shows a block diagram of the processing means according to a preferred embodiment of the invention in greater detail.
Figures 6 and 7 show block diagrams for detecting implemented in the processing means according to the invention.
Figures 8 and 9 show two different telegram layouts.
Figure 10 shows a block diagram of the interface between the processing means and the antenna means according to another preferred embodiment of the invention.

### PREFERRED EMBODIMENTS

In the following description, for purposes of explanation and not limitation, specific details are set forth, such as particular techniques and applications in order to provide a thorough understanding of the present invention. However, it will be apparent to one skilled in the art that the present invention may be practiced in other embodiments that depart from these specific details. In other instances, detailed descriptions of well-known methods and apparatuses are omitted so as not to obscure the description of the present invention with unnecessary details.

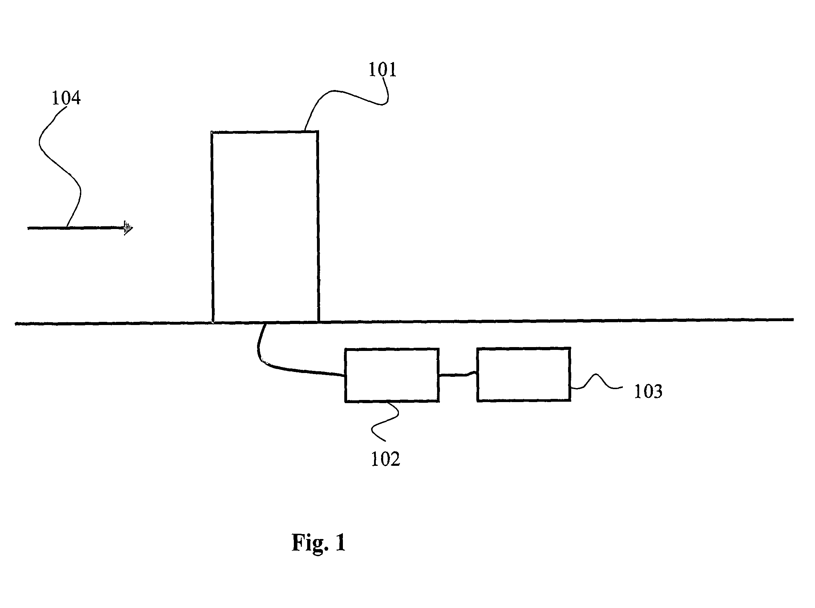

Figure 1 shows a schematic side view of an arrangement according to the present invention. A transponder reader 101 is connected to processing means 102, which in turn is connected to post-processing means 103. In the application of registration of lactating animals the post-processing means may for instance include a database for registration of data relating to each identified animal. The purpose of the transponder reader 101 and the processing means 102 are to identify an animal passing through the reader 101 in the direction indicated by the arrow 104. The animals may for instance be on their way to a milking station, where further data may be registered and conveyed to the post-processing means 103 for storage in the database (not shown).

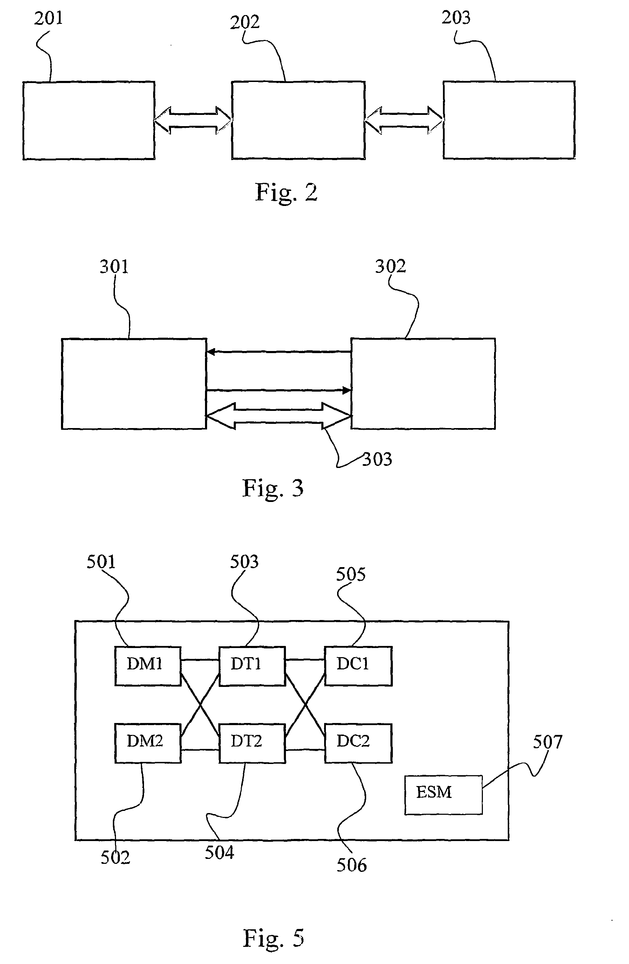

Figure 2 shows a schematic block diagram of an embodiment according to the present invention. An antenna module 201 comprises the actual antenna as well as analogue, and in one embodiment, digital circuitry. The antenna module comprises means for adjusting the antenna characteristics, such as matching circuits, means for connecting or disconnecting parasitic elements, as well as regulating the output power or the signal form and radiation pattern. This is used for adapting the antenna to send and receive signal in specific frequency bands, in full- or half-duplex, or modify the radiation pattern so as to not disturb, or at least to disturb less, closely positioned electronic devices, including other transponder readers.

The antenna module 201 communicates with the processor module 202, to be discussed in detail below, which in turn is in communication with a data bus module 203 adapted for communication with other processing means (not shown) as discussed above.

Figure 3 discloses a schematic block diagram of an embodiment according to the invention. In this embodiment, a digital interface 303 is implemented between an antenna module 301 and a processor module 302 besides to transmission and receiving links, Tₓ and Rₓ respectively. Thus the processor module 302 may instruct the antenna module to set particular antenna characteristics in dependence of calculated and detected circumstances. For instance may the processor module 302 analyse the signal Rₓ and conclude that the signal-to-noise ratio would improve if the antenna characteristics would change to a calculated extent. Thus, the processor module 302 can send a message according to this conclusion to the antenna module 301, which will adapt the antenna characteristics.

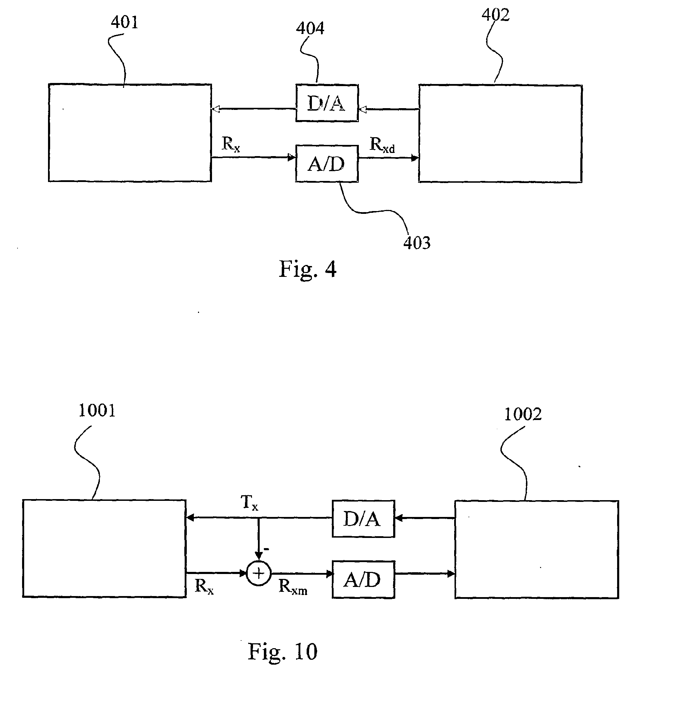

Figure 4 shows the signal interface between an antenna module 401 and a processor module 402 in greater detail, where a A/D-converter 403 converts the analogue signal Rₓ, received by the antenna module 401, to a digital signal R_{xd} which is fed to the processor module 402. A D/A-converter converts a digital signal T_{xd}, construed in the processing module 402, into an analogue signal Tₓ to be transmitted by the antenna module 401. Thus, the processor module is working in the digital domain whereas the antenna module, with respect to received and transmitted signals, work in the analogue domain.

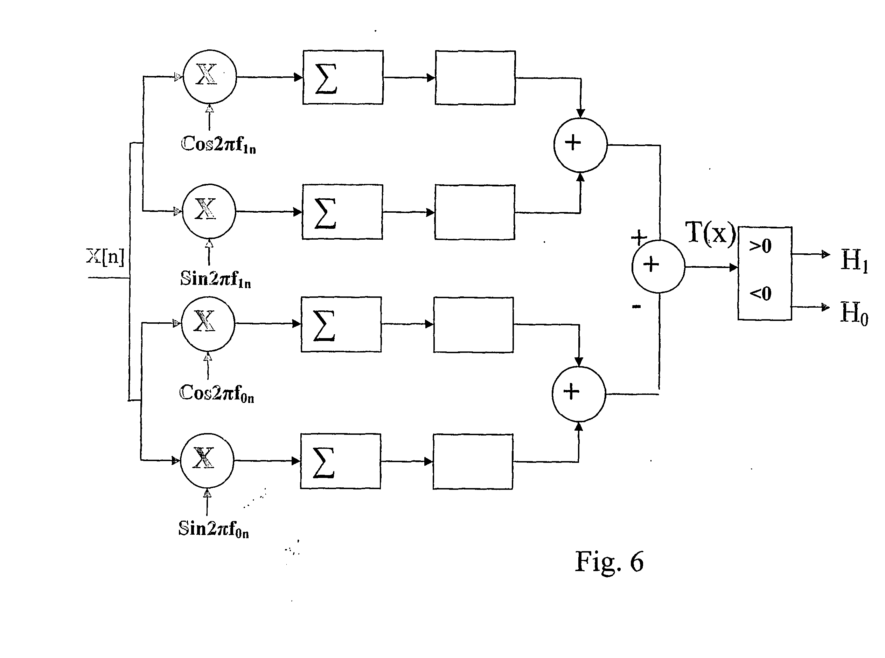

Figure 5 shows the processor module in greater detail in a block diagram according to an embodiment of the invention. The processor module comprises first and second demodulation blocks 501 and 502, first and second detecting blocks 503 and 504, and first and second decoding blocks 505 and 506.

The demodulation modules 501 and 502 each comprises code, implemented in hardware or software, to implement demodulation according to different methods or schemes. For demodulation this may include different filters for down-converting the received signal R_{xd} to a baseband. The different blocks may include different filters, and each block may be designed to deal with signals from a special transponder signalling in one or two frequency bands, which may be different for different transponders.

Below is table 1, which lists different characteristic for two different exemplary transponder systems.

| **Parameter** | **FDX-transponder** | **HDX-transponder** |
|---|---|---|
| **Activation frequency** | 134,2 kHz | 134,2 kHz |

| **Modulation** | AM | FSK |
|---|---|---|
| **Returned Frequency** | 129,0 to 133,2 kHz | 124,2 kHz (1) |
| | 135,2 to 139,4 kHz | 134,2 kHz (0) |

| **Channel Coding** | Modified DBP | None |
|---|---|---|
| **Symbol Time** | 0,23845 ms | 0, 1288 ms for "1" |
| | | 0, 1192 ms for "0" |
| **Bit rate** | 4194 Hz | 7762,5 Hz for "1" |
| | | 8387,5 Hz for "0" |
| **Number of bits in message** | 128 | 112 |

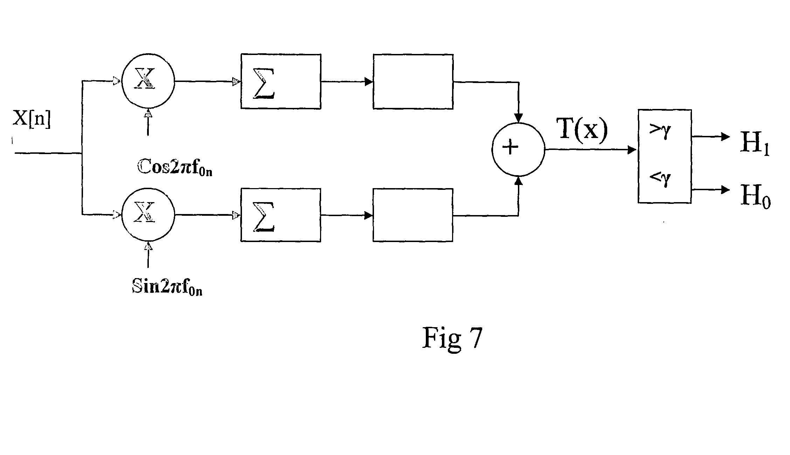

The detection modules 503 and 504 each comprises code, implemented in hardware or software, to implement detection of symbols according to different methods or schemes. To be further described in connection with figures 6 and 7. The outcome of detection is a sequence of bits called a telegram.

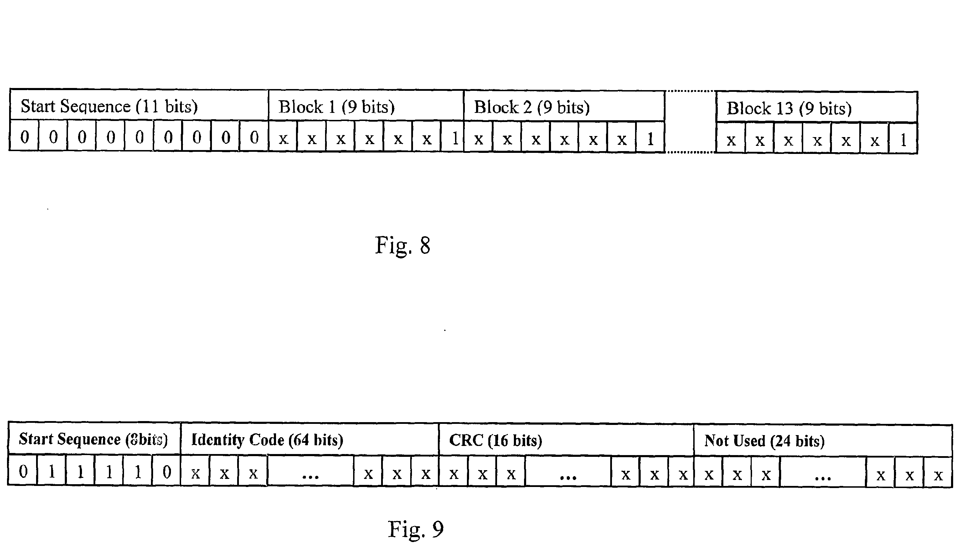

Finally, the decoding modules 505 and 506 each comprises code, implemented in hardware or software, to implement decoding of the telegram according to different methods or schemes. The telegram is analysed and the ID-code is resolved. In figures 8 and 9 are two different telegrams disclosed. The first task in decoding may for instance be to compare the leading bits of the telegram with a known preamble. If the leading bits do not match the preamble the telegram is rejected or considered invalid. Telegrams according to different transponder systems comprise different preambles. The integrity of the telegram is checked next for instance with error detection bits in the telegram. This integrity test may also differ for different systems.

Which demodulation, detection and decoding modules to use may be selected in different ways. For instance may an operator select the system in which the transponder reader should work which will determine, for instance by using a database, which modules to use.

In a preferred embodiment the processor module 202 comprises an evaluation and selection module 507. The evaluation and selection module (ESM) controls the selection of the other modules and may for instance order a specific set of modules to handle the reception of a signal. Different characteristics are calculated, such as signal-to-noise ratio, bit error rate, telegram rejection rate etc, and saved. This may be performed for a number of different occasions and the different results compared. The ESM then selects the combination of modules that will give the best performance of the reader for further detection of transponders.

The ESM may also be adapted to characterise interference in the environment and possibly adapt and control the antenna characteristics accordingly or recognise defective transponders and alarm an operator.

In one embodiment the ESM uses a number of different combinations of modules until a combination results in a valid telegram. This telegram is then forwarded as a valid telegram on the data bus.

Figure 6 and 7 each disclose in block diagram a different decoding scheme to be implemented by each detection module 503 and 504, respectively. Figure 6 disclose a detection method suitable to use for a half-duplex transponder using two different frequencies f₀ and f₁ to represent a "0" and a "1", respectively. Figure 7 shows a detection method where no signal indicates a "1" and a signal with frequency f₀ indicates a "0". Both these methods are known per se and are therefore not further discussed.

The processor module may comprise several more of each demodulating, detection and decoding modules all implementing different methods for performing tasks according to different transponder reader systems.

Figure 10 shows a block diagram of the interface between antenna means 1001 and processing means 1002 according to the invention when a full-duplex protocol is used. In this embodiment the Tₓ signal is subtracted from the received signal Rₓ to form a new modified received signal Rₓₘ. By this operation the signal Rₓₘ is more easily demodulated and is not so difficult, that is do not require as many valid digits, to resolve.

It will be obvious that the invention may be varied in a plurality of ways. Such variations are not to be regarded as a departure from the scope of the invention. All such modifications as would be obvious to one skilled in the art are intended to be included within the scope of the appended claims.

## Claims

1. A transponder reader (101) for reading data from transponders, wherein each transponder is arranged to send data according to a transponder signalling protocol of a number of different transponder signalling protocols, said transponder reader (101) comprising an antenna means (201, 301, 401) for sending a first analogue signal to one of said transponders and receiving from said transponder a second analogue signal containing identification information, and said transponder reader (101) further comprising means for analysing said second analogue signal received by said antenna means (201, 301, 401),
**characterised in that** said transponder reader (101) further comprises:
- a digital signal processing means (102, 202, 302, 402)
- an analogue to digital converter (403) arranged to receive said second analogue signal from said antenna means (201, 301, 401), to convert said second analogue signal to a first digital signal and to supply said first digital signal to said digital signal processing means (102, 202, 302, 402), wherein said digital signal processing means (102, 202, 302, 402) comprises means (503, 504) for analysing said first digital signal in order to determine by which transponder signalling protocol, of at least two different transponder signalling protocols, said second analogue signal was received.

2. The transponder reader according to claim 1, wherein said analysing means (503, 504) comprises first demodulating, detecting and decoding means for demodulating, detecting and decoding digital signals according to a first transponder signalling protocol and second demodulating, detecting and decoding means for demodulating, detecting and decoding digital signals according to a second transponder signalling protocol.

3. The transponder reader according to claim 1 or 2, wherein said transponder reader (101) further comprises transmitting means for sending said analysed first digital signal to post-processing means (103).

4. The transponder reader according to any of claims 1-3, wherein
- said antenna means (201, 301, 401) comprises means for controlling the antenna characteristics,
- said antenna means (201, 301, 401) comprises a digital interface for receiving digital messages from said digital processing means (102, 202, 302, 402) and transmitting digital messages to said digital processing means (102, 202, 302, 402),
- said antenna means (201, 301, 401) is arranged to control said antenna characteristics in dependence of said received digital messages, and
- said antenna means (201, 301, 401) is arranged to transmit digital messages relating to the antenna characteristics to said digital processing means (102, 202, 302, 402).

5. The transponder reader according to claim 4, wherein said digital messages comprises information selected from the group of information comprising: antenna ready to send, antenna on line, output amplification, and frequency tuning coefficients.

6. The transponder reader according to any of claims 1-5, wherein
- each of said at least two protocols is one of: half-duplex protocols, full-duplex protocols, proprietor protocols (B-protocol) and read/write protocols.

7. The transponder reader according to any of the claims above, wherein
- said digital processing means (102, 202, 302, 402) is arranged to supply second digital signals to a digital to analogue converter (404) for converting said digital signal to said first analogue signal,
- said digital to analogue converter (404) is arranged to supply said first analogue signal to said antenna means (201, 301, 401) for transmission.

8. The transponder reader according to claim 1 or 2, wherein
- said digital processing means (102, 202, 302, 402) comprises means for demodulating said first digital signal according to a first and at least a second demodulation scheme.

9. The transponder reader according to claim 8, wherein
- said digital processing means (102, 202, 302, 402) comprises means for detection of symbols from said demodulated digital signal according to a first and at least a second symbol detection scheme.

10. The transponder reader according to claim 9, wherein
- said digital processing means (102, 202, 302, 402) comprises means for decoding symbols from said detected symbols according to a first and at least a second symbol decoding scheme.

11. The transponder reader according to claim 10, wherein
- said decoding means comprises or consists of means for performing an error detection check e.g. a cyclic redundancy check.

12. The transponder reader according to claim 10, wherein
- said transponder reader (101) comprises means for detecting which of said first and at least second means for demodulating, detection, and decoding that produces the best signal detection quality and using said means.

13. The transponder reader according to claim 10, further comprising means for an operator to select which demodulator, detector and decoder to be used by said digital processing means.

14. The transponder reader according to claim 1, wherein
- said one of at least two different transponder signalling protocols is a full duplex protocol, and
- said digital signal processing means (102, 202, 302, 402) comprises means for subtracting said first analogue signal from said second analogue signal to remove the contribution from the first analogue signal from the reception of said second analogue signal.

15. The transponder reader according to claim 14, wherein
- said digital signal processing means (102, 202, 302, 402) comprises means for boosting said first analogue signal before being subtracted from said second analogue signal.

16. The transponder reader according to claim 1, wherein
- said transponder reader (101) comprises means for deciding which of at least said two different transponder signalling protocols that said transponder is using in responding to said first analogue signal, and means for using said protocol.

17. The transponder reader according to claim 16, wherein
- said decision is performed in a start up sequence and that said transponder reader (101) is arranged to assume that all transponders are working according to said detected protocol.

18. The transponder reader according to claim 1, further comprising means for an operator to select the appropriate transponder signalling protocol.

19. The transponder reader according to claim 4, wherein
- said transponder reader (101) comprises means for setting antenna characteristics in dependence of detected environmental characteristics so as to achieve optimal signalling detection quality in relation to the electromagnetic environment.

20. The transponder reader according to claim 9, further comprising means for controlling the phase of said first analogue signal.

21. A method for use in a transponder reader (101) for reading data from transponders, wherein each of said transponders send data according to one of a number of transponder signalling protocols, the method comprising the steps of:
- sending, from said transponder reader (101), a first analogue signal to one of said transponders and receiving, in said transponder reader (101), a second analogue signal from said transponders using an antenna means (201, 301, 401), and
- analysing, in said transponder reader (101), said second analogue signal received by said antenna means (201, 301, 401),
**characterised in the further steps of:**
- converting, in said transponder reader (101), said second analogue signal from the analogue domain to a first digital signal in the digital domain,
- supplying, in said transponder reader (101), said first digital signal to digital processing means, and
- analysing, in said transponder reader, said received first digital signal using said digital processing means (102, 202, 302, 402) for establishing which of at least two different transponder signalling protocols said transponder uses,
- selecting, in said transponder reader (101), said established one of said at least two different transponder signalling protocols, and
- analysing, in said transponder reader (101), said first digital signal according to said selected transponder signalling protocol.

22. The method according to claim 21, wherein said step of analysing comprises demodulating, detecting and decoding digital signals according to a first and at least a second transponder signalling protocol.

23. The method according to claim 21 or 22, further comprising the step of sending, in said transponder reader, said analysed first digital signal to post-processing means.

24. The method according to claim 21, wherein
- said antenna means comprises means for controlling the antenna characteristics,
- said antenna means comprises a digital interface for receiving digital messages from said digital processing means and transmitting digital messages to said digital processing means, and **characterised by** the further steps of
- controlling said antenna characteristics in dependence of said received digital messages, and
- transmitting digital messages from said antenna means relating to the antenna characteristics to said digital processing means.

25. The method according to claim 24, wherein said digital messages comprises information selected from the group of information comprising: antenna ready to send, antenna on line, output amplification, and frequency tuning coefficients.

26. The method according to any of claims 21-25, wherein
- each of said at least two protocols are selected from the group of protocols including: half-duplex protocols, full-duplex protocols, proprietor protocols (B-protocol), and read/write protocols.

27. The method according to any of claims 21-26, further comprising the steps of
- supplying second digital signals, from said digital processing means to a digital to analogue converter for converting said digital signal to said first analogue signal,
- supplying said first analogue signal, from said digital to analogue converter to said antenna means for transmission.

28. The method according to claim 21, wherein
- said digital processing means comprises means for demodulating said first digital signal according to a first and at least a second demodulation scheme.

29. The method according to claim 28, wherein
- said digital processing means comprises means for detection of symbols from said demodulated digital signal according to a first and at least a second symbol detection scheme.

30. The method according to claim 29, wherein
- said digital processing means comprises means for decoding symbols from said detected symbols according to a first and at least a second symbol decoding scheme.

31. The method according to claim 30, wherein
- said decoding comprises or consists of performing a error detection check e.g. a cyclic redundancy check.

32. The method according to claim 30, comprising the steps of:
- detecting, in said transponder reader, which of said first and at least second means for demodulating, detection, and decoding that produces the best signal detection quality and using said means.

33. The method according to claim 30, wherein
- an operator selects which demodulator, detector and decoder to be used by said digital processing means.

34. The method according to claim 21, wherein
- said one of at least two different transponder signalling protocols is a full duplex protocol, and **characterised in** the further steps of:
- subtracting, in said transponder reader, said first analogue signal from said second analogue signal to remove the contribution from the first analogue signal from the reception of said second analogue signal.

35. The method according to claim 34, comprising the step of:
- boosting, in said transponder reader, said first analogue signal before subtracting said first analogue signal from said second analogue signal.

36. The method according to claim 21, comprising the step of:
- deciding, in said transponder reader, which of at least said two different transponder signalling protocols that said transponder is using in responding to said first analogue signal and using said protocol.

37. The method according to claim 36, comprising the step of:
- performing said decision in a start up sequence and assuming that all transponders are working according to said detected protocol.

38. The method according to claim 21, wherein
- an operator selects the appropriate transponder signalling protocol.

39. The method according to claim 24, comprising the step of:
- setting antenna characteristics in dependence of detected environmental characteristics so as to achieve optimal signalling detection quality in relation to the electromagnetic environment.

40. The method according to claim 24, further comprising the step of controlling the phase of said first analogue signal.

## Patentansprüche

1. Transponderleser (101) zum Lesen von Daten von Transpondern, wobei jeder Transponder dazu dient, Daten entsprechend einem Transpondersendeprotokoll aus einer Anzahl von unterschiedlichen Transpondersendeprotokollen zu senden, wobei der Transponderleser (101) eine Antenneneinrichtung (201, 301, 401) zum Senden eines ersten Analogsignals an einen der Transponder und zum Empfangen eines zweiten Analogsignals, das Identifikationsinformationen enthält, von diesem Transponder aufweist, wobei der Transponderleser (101) weiterhin eine Einrichtung zum Analysieren des von der Antenneneinrichtung (201, 301, 401) empfangenen zweiten Analogsignals umfaßt,
**dadurch gekennzeichnet, daß** der Transponderleser (101) weiterhin
- eine digitale Signalverarbeitungseinrichtung (102, 202, 302, 402) umfaßt sowie
- einen Analog-Digital-Wandler (403), der dazu dient, das zweite Analogsignal von der Antenneneinrichtung (201, 301, 401) zu empfangen, dieses zweite Analogsignal in ein erstes Digitalsignal umzuwandeln und dieses erste Digitalsignal der digitalen Signalverarbeitungseinrichtung (102, 202, 302, 402) zuzuführen, wobei die digitale Signalverarbeitungseinrichtung (102, 202, 302, 402) eine Einrichtung (503, 504) zum Analysieren des ersten Digitalsignals umfaßt, um zu bestimmen, über welches Transpondersendeprotokoll von mindestens zwei unterschiedlichen Transpondersendeprotokollen das zweite Analogsignal empfangen wurde.

2. Transponderleser nach Anspruch 1, wobei die Analyseeinrichtung (503, 504) eine erste Demodulations-, Erfassungs- und Dekodierungseinrichtung zum Demodulieren, Erfassen und Dekodieren digitaler Signale entsprechend einem ersten Transpondersendeprotokoll umfaßt sowie eine zweite Demodulations-, Erfassungs- und Dekodierungseinrichtung zum Demodulieren, Erfassen und Dekodieren digitaler Signale entsprechend einem zweiten Transpondersendeprotokoll.

3. Transponderleser nach Anspruch 1 oder 2, wobei der Transponderleser (101) weiterhin eine Übertragungseinrichtung zum Senden des analysierten ersten Digitalsignals an eine Nachverarbeitungseinrichtung (101) umfaßt.

4. Transponderleser nach einem der Ansprüche 1 bis 3, wobei
- die Antenneneinrichtung (201, 301, 401) eine Einrichtung zum Steuern der Antennencharakteristika umfaßt
- die Antenneneinrichtung (201, 301, 401) eine digitale Schnittstelle zum Empfangen digitaler Nachrichten von der digitalen Verarbeitungseinrichtung (102, 202, 302, 402) und zum Übermitteln digitaler Nachrichten an die digitale Verarbeitungseinrichtung (102, 202, 302, 402) umfaßt,
- die Antenneneinrichtung (201, 301, 401) dazu dient, die Antennencharakteristika in Abhängigkeit von den empfangenen digitalen Nachrichten zu steuern, und
- die Antenneneinrichtung (201, 301, 401) dazu dient, digitale Nachrichten, die sich auf die Antennencharakteristika beziehen, an die digitale Verarbeitungseinrichtung (102, 202, 302, 402) zu übertragen.

5. Transponderleser nach Anspruch 4, wobei die digitalen Nachrichten Informationen umfassen, die aus der folgenden Gruppe von Informationen ausgewählt sind: Antenne bereit zum Senden, Antenne angeschlossen, Ausgabeverstärkungsfaktor und Frequenzabstimmungskoeffizienten.

6. Transponderleser nach einem der Ansprüche 1 bis 5, wobei
- jedes der mindestens zwei Protokolle eins der folgenden ist: Halbduplexprotokolle, Vollduplexprotokolle, proprietäre Protokolle (B-Protokoll) und Lese/ Schreib-Protokolle.

7. Transponderleser nach einem der vorangegangenen Ansprüche, wobei
- die digitale Verarbeitungseinrichtung (102, 202, 302, 402) dazu dient, zweite Digitalsignale an einen Digital-Analog-Wandler (404) zum Umwandeln des Digitalsignals in das erste Analogsignal zu liefern,
- der Digital-Analog-Wandler (404) dazu dient, das erste Analogsignal an die Antenneneinrichtung (201, 301, 401) zur Übertragung zu liefern.

8. Transponderleser nach Anspruch 1 oder 2, wobei
- die digitale Verarbeitungseinrichtung (102, 202, 302, 402) eine Einrichtung zum Demodulieren des ersten Digitalsignals entsprechend einem ersten und mindestens einem zweiten Demodulationsschema umfaßt.

9. Transponderleser nach Anspruch 8, wobei
- die digitale Verarbeitungseinrichtung (102, 202, 302, 402) eine Einrichtung zum Erfassen von Symbolen vom demodulierten Digitalsignal entsprechend einem ersten und mindestens einem zweiten Symbolerfassungsschema umfaßt.

10. Transponderleser nach Anspruch 9, wobei
- die digitale Verarbeitungseinrichtung (102, 202, 302, 402) eine Einrichtung zum Dekodieren von Symbolen von den erfaßten Symbolen entsprechend einem ersten und mindestens einem zweiten Symboldekodierschema umfaßt.

11. Transponderleser nach Anspruch 10, wobei
- die Dekodierungseinrichtung eine Einrichtung zum Durchführen einer Fehlerüberprüfung, zum Beispiel eine zyklische Blockprüfung, umfaßt oder aus ihr besteht.

12. Transponderleser nach Anspruch 10, wobei
- der Transponderleser (101) eine Einrichtung umfaßt, die erfaßt, welche der ersten und mindesten zweiten Einrichtungen zum Demodulieren, Erfassen und Dekodieren die beste Signalerfassungsqualität produziert, und diese Einrichtung verwendet.

13. Transponderleser nach Anspruch 10, weiterhin umfassend eine Einrichtung, mit der ein Benutzer auswählen kann, welche der Demodulations-, Erfassungs- und Dekodierungs-Einrichtungen von der digitalen Verarbeitungseinrichtung verwendet werden soll.

14. Transponderleser nach Anspruch 1, wobei
- das eine der mindestens zwei unterschiedlichen Transpondersendeprotokolle ein Vollduplexprotokoll ist und
- die digitale Signalverarbeitungseinrichtung (102, 202, 302, 402) eine Einrichtung zum Subtrahieren des ersten Analogsignals vom zweiten Analogsignal umfaßt, um den Beitrag des ersten Analogsignals vom Empfang des zweiten Analogsignals zu entfernen.

15. Transponderleser nach Anspruch 14, wobei
- die digitale Signalverarbeitungseinrichtung (102, 202, 302, 402) eine Einrichtung zum Verstärken des ersten Analogsignals umfaßt, bevor es vom zweiten Analogsignal subtrahiert wird.

16. Transponderleser nach Anspruch 1, wobei
- der Transponderleser (101) eine Einrichtung umfaßt, die in Reaktion auf das erste Analogsignal entscheidet, welches der mindestens zwei unterschiedlichen Transpondersendeprotokolle der Transponder verwendet, sowie eine Einrichtung zum Verwenden des Protokolls.

17. Transponderleser nach Anspruch 16, wobei
- die Entscheidung beim Hochfahren gefällt wird und wobei der Transponderleser (101) dann annimmt, daß alle Transponder entsprechend dem erfaßten Protokoll arbeiten.

18. Transponderleser nach Anspruch 1, weiterhin umfassend eine Einrichtung, mit der ein Benutzer das angemessene Transpondersendeprotokoll auswählen kann.

19. Transponderleser nach Anspruch 4, wobei
- der Transponderleser (101) eine Einrichtung zum Setzen der Antennencharakteristika in Abhängigkeit von erfaßten Umgebungsbedingungen umfaßt, um eine optimale Sendeerfassungsqualität im Hinblick auf die elektromagnetische Umgebung zu erreichen.

20. Transponderleser nach Anspruch 9, weiterhin umfassend eine Einrichtung zum Steuern der Phase des ersten Analogsignals.

21. Verfahren zur Verwendung in einem Transponderleser (101) zum Lesen von Daten von Transpondern, wobei jeder der Transponder Daten entsprechend einem Protokoll aus einer Anzahl von Transpondersendeprotokollen sendet, wobei das Verfahren die folgenden Schritte umfaßt:
- Senden eines ersten Analogsignals vom Transponderleser (101) an einen der Transponder und Empfangen eines zweiten Analogsignals von den Transpondern im Transponderleser (101) unter Verwendung einer Antenneneinrichtung (201, 301, 401), und
- Analysieren des zweiten Analogsignals im Transponderleser (101), das von der Antenneneinrichtung (201, 301, 401) empfangen wurde,
**gekennzeichnet durch** die weiteren Schritte:
- Umwandeln des zweiten Analogsignals von der analogen Domäne in ein erstes Digitalsignal in der digitalen Domäne im Transponderleser (101),
- Liefern des ersten Digitalsignals an die digitale Verarbeitungseinrichtung im Transponderleser (101) und
- Analysieren des empfangenen ersten Digitalsignals im Transponderleser unter Verwendung der digitalen Verarbeitungseinrichtung (102, 202, 302, 402), um festzustellen, welches von mindestens zwei unterschiedlichen Transpondersendeprotokollen der Transponder verwendet,
- Auswählen des von den mindestens zwei unterschiedlichen Transpondersendeprotokollen festgestellten, und
- Analysieren des ersten Digitalsignals entsprechend dem ausgewählten Transpondersendeprotokoll im Transponderleser (101).

22. Verfahren nach Anspruch 21, wobei der Schritt des Analysierens eine Demodulation, Erfassung und Dekodierung von Digitalsignalen nach einem ersten und mindestens einem zweiten Transpondersendeprotokoll umfaßt.

23. Verfahren nach Anspruch 21 oder 22, weiterhin umfassend den Schritt des Sendens des analysierten ersten Digitalsignals an die Nachverarbeitungseinrichtung im Transponderleser.

24. Verfahren nach Anspruch 21, wobei
- die Antenneneinrichtung eine Einrichtung zum Steuern der Antennencharakteristika umfaßt,
- die Antenneneinrichtung eine digitale Schnittstelle zum Empfangen von digitalen Nachrichten von der digitalen Verarbeitungseinrichtung und zum Übermitteln digitaler Nachrichten an die digitale Übermittlungseinrichtung umfaßt, charakterisiert durch die weiteren Schritte:
- Steuern der Antennencharakteristika in Abhängigkeit von den empfangenen digitalen Nachrichten, und
- Übermitteln der digitalen Nachrichten, die sich auf die Antennencharakteristika beziehen, von der Antenneneinrichtung an die digitale Verarbeitungseinrichtung.

25. Verfahren nach Anspruch 24, wobei die digitalen Nachrichten Informationen umfassen, die aus der folgenden Gruppe ausgewählt sind: Antenne bereit zum Senden, Antenne angeschlossen, Ausgabeverstärkungsfaktor und Frequenzabstimmungskoeffizienten.

26. Verfahren nach einem der Ansprüche 21 bis 25, wobei
- jedes der mindestens zwei Protokolle ausgewählt ist aus der folgenden Gruppe von Protokollen: Halbduplexprotokolle, Vollduplexprotokolle, proprietäre Protokolle (B-Protokoll) und Lese-/Schreib-Protokolle.

27. Verfahren nach einem der Ansprüche 21 bis 26, weiterhin umfassend die folgenden Schritte:
- Liefern der zweiten Digitalsignale von der digitalen Verarbeitungseinrichtung an einen Digital-Analog-Wandler zum Umwandeln des Digitalsignals in das erste Analogsignal,
- Liefern des ersten Analogsignals vom Digital-Analog-Wandler an die Antenneneinrichtung zur Übertragung.

28. Verfahren nach Anspruch 21, wobei
- die digitale Verarbeitungseinrichtung eine Einrichtung zum Demodulieren des ersten Digitalsignales entsprechend einem ersten und mindestens einem zweiten Demodulationsschema umfaßt.

29. Verfahren nach Anspruch 28, wobei
- die digitale Verarbeitungseinrichtung eine Einrichtung zum Erfassen von Symbolen vom demodulierten Digitalsignal entsprechend einem ersten und mindestens einem zweiten Symbolerfassungsschema umfaßt.

30. Verfahren nach Anspruch 29, wobei
- die digitale Verarbeitungseinrichtung eine Einrichtung zum Dekodieren von Symbolen von den erfaßten Symbolen entsprechend einem ersten und mindestens einem zweiten Symboldekodierschema umfaßt.

31. Verfahren nach Anspruch 30, wobei
- das Dekodieren das Durchführen einer Fehlererfassung, zum Beispiel eine zyklische Blockprüfung, umfaßt oder darin besteht.

32. Verfahren nach Anspruch 30, umfassend die folgenden Schritte:
- Erfassen im Transponderleser, welche der ersten und mindestens zweiten Einrichtungen zum Demodulieren, Erfassen und Dekodieren die beste Signalerfassungsqualität produziert, und Verwenden dieser Einrichtung.

33. Verfahren nach Anspruch 30, wobei
- ein Benutzer auswählt, welche Demodulations-, Erfassungs- und Dekodiereinrichtung von der digitalen Verarbeitungseinrichtung verwendet werden soll.

34. Verfahren nach Anspruch 21, wobei
- das eine der mindestens zwei unterschiedlichen Transpondersendeprotokolle ein Vollduplexprotokoll ist, **gekennzeichnet durch** die weiteren Schritte:
- Substrahieren des ersten Analogsignals vom zweiten Analogsignal im Transponderleser, um den Beitrag des ersten Analogsignals vom Empfang des zweiten Analogsignals zu entfernen.

35. Verfahren nach Anspruch 34, umfassend den folgenden Schritt:
- Verstärken des ersten Analogsignals im Transponderleser, bevor das erste Analogsignal vom zweiten Analogsignal subtrahiert wird.

36. Verfahren nach Anspruch 21, umfassend den folgenden Schritt:
- Entscheiden in Reaktion auf das erste Analogsignal im Transponderleser, welches der mindestens zwei unterschiedlichen Transpondersendeprotokolle der Transponder verwendet, und Verwenden dieses Protokolls.

37. Verfahren nach Anspruch 36, umfassend den folgenden Schritt:
- Durchführen der Entscheidung beim Hochfahren und Annehmen, daß alle Transponder entsprechend dem erfaßten Protokoll arbeiten.

38. Verfahren nach Anspruch 21, wobei
- ein Benutzer das angemessene Transpondersendeprotokoll auswählt.

39. Verfahren nach Anspruch 24, umfassend den folgenden Schritt:
- Setzen der Antennencharakteristika in Abhängigkeit von erfaßten Umgebungsbedingungen, um eine optimale Signalerfassungsqualität im Hinblick auf die elektromagnetische Umgebung zu erreichen.

40. Verfahren nach Anspruch 24, weiterhin umfassend den Schritt des Steuerns der Phase des ersten Analogsignals.

## Revendications

1. Lecteur (101) de transpondeurs servant à lire des données provenant de transpondeurs, dans lequel chaque transpondeur est conçu pour envoyer des données suivant un protocole de signalisation de transpondeur parmi un certain nombre de protocoles de signalisation de transpondeurs différents, ledit lecteur (301) de transpondeurs comprenant un moyen formant antenne (201, 301, 401) pour envoyer un premier signal analogique à l'un desdits transpondeurs et recevoir dudit transpondeur un second signal analogique contenant des informations d'identification, et ledit lecteur (101) de transpondeurs comportant en outre un moyen pour analyser ledit second signal analogique reçu par ledit moyen formant antenne (201, 301, 401),
**caractérisé en ce que** ledit lecteur (101) de transpondeurs comprend en outre :
- un moyen de traitement (102, 202, 302, 402) de signaux numériques
- un convertisseur analogique-numérique (403) conçu pour recevoir dudit moyen, formant antenne (201, 301 et 401) ledit second signal analogique, pour convertir ledit second signal analogique en un premier signal numérique et pour fournir ledit signal numérique audit moyen de traitement (102, 202, 302, 402) de signaux numériques, ledit moyen de traitement (102, 202, 302, 402) de signaux numériques comportant un moyen (503, 504) pour analyser ledit premier signal numérique afin de déterminer par quel protocole de signalisation de transpondeurs, ou au moins par quelle paire de protocoles de signalisation de transpondeurs différents ledit second signal analogique a été reçu.

2. Lecteur de transpondeurs selon la revendication 1, dans lequel ledit moyen d'analyse (503, 504) comporte des premiers moyens de démodulation, de détection et de décodage pour démoduler, détecter et décoder des signaux numériques suivant un premier protocole de signalisation de transpondeurs, et des seconds moyens de démodulation, détection et décodage pour démoduler, détecter et décoder des signaux numériques suivant un second protocole de signalisation de transpondeurs.

3. Lecteur de transpondeurs selon la revendication 1 ou 2, ledit lecteur (101) de transpondeurs comprenant en outre un moyen d'émission pour envoyer ledit premier signal numérique analysé à un moyen de post-traitement (103).

4. Lecteur de transpondeurs selon l'une quelconque des revendications 1 à 3, dans lequel
- ledit moyen formant antenne (201, 301, 401) comporte un moyen pour commander les caractéristiques de l'antenne,
- ledit moyen formant antenne (201, 301, 401) comporte une interface numérique pour recevoir des messages numériques dudit moyen de traitement numérique (102, 202, 302, 402) et pour émettre des messages numériques vers ledit moyen de traitement numérique (102, 202, 302, 402),
- ledit moyen formant antenne (201, 301, 401) est conçu pour commander lesdites caractéristiques de l'antenne en fonction desdits messages numériques reçus, et
- ledit moyen formant antenne (201, 301, 401) est conçu pour émettre vers ledit moyen de traitement numérique (102, 202, 302, 402) des messages numériques concernant les caractéristiques de l'antenne.

5. Lecteur de transpondeurs selon la revendication 4, dans lequel lesdits messages numériques contiennent des informations choisies parmi le groupe d'informations comportant : antenne prête à envoyer, antenne en ligne, amplification de sortie et coefficients d'accord de fréquence.

6. Lecteur de transpondeur selon l'une quelconque des revendications 1 à 5, dans lequel
- chacun desdits au moins deux protocoles est l'un des protocoles suivants : protocoles en semi-duplex, protocoles en duplex intégral, protocoles d'entreprises (protocole B) et protocoles de lecture/écriture.

7. Lecteur de transpondeurs selon l'une quelconque des revendications précédentes, dans lequel
- ledit moyen de traitement numérique (102, 202, 302, 402) est conçu pour fournir des seconds signaux numériques à un convertisseur numérique-analogique (404) pour convertir ledit signal numérique en ledit premier signal analogique,
- ledit convertisseur numérique-analogique (404) est conçu pour fournir ledit premier signal analogique audit moyen formant antenne (201, 301, 401) pour son émission.

8. Lecteur de transpondeurs selon la revendication 1 ou 2, dans lequel
- ledit moyen de traitement numérique (102, 202, 302, 402) comporte un moyen pour démoduler ledit premier signal numérique suivant une première et au moins une seconde méthodes de démodulation.

9. Lecteur de transpondeurs selon la revendication 8, dans lequel
- ledit moyen de traitement numérique (102, 202, 302, 402) comporte un moyen pour détecter des symboles à partir dudit signal numérique démodulé, suivant une première et au moins une seconde méthodes de détection de symboles.

10. Lecteur de transpondeurs selon la revendication 9, dans lequel
- ledit moyen de traitement numérique (102, 202, 302, 402) comporte un moyen pour décoder des symboles à partire desdits symboles détectés, suivant une première et au moins une seconde méthodes de décodage de symboles.

11. Lecteur de transpondeurs selon la revendication 10, dans lequel
- ledit moyen de décodage comporte ou est constitué par un moyen pour effectuer un contrôle de détection d'erreur, par exemple un contrôle par redondance cyclique.

12. Lecteur de transpondeurs selon la revendication 10, dans lequel
- ledit lecteur (101) de transpondeurs comprend un moyen pour détecter celui desdits premier et au moins second moyens de démodulation, détection et décodage qui produit la meilleure qualité de détection de signaux, et pour utiliser ledit moyen.

13. Lecteur de transpondeurs selon la revendication 10, comprenant en outre un moyen pour qu'un opérateur choisisse le démodulateur, le détecteur et le décodeur à utiliser par ledit moyen de traitement numérique.

14. Lecteur de transpondeurs selon la revendication 1, dans lequel
- ledit un d'au moins deux protocoles de signalisation de transpondeurs différents est un protocole en duplex intégral, et
- ledit moyen de traitement (102, 202, 302, 402) de signaux numériques comporte un moyen pour soustraire dudit second signal analogique ledit premier signal analogique afin de supprimer la contribution du premier signal analogique à la réception dudit second signal analogique.

15. Lecteur de transpondeurs selon la revendication 14, dans lequel
- ledit moyen de traitement (102, 202, 302, 402) de signaux numériques comporte un moyen pour renforcer ledit premier signal analogique avant qu'il ne soit soustrait dudit second signal analogique.

16. Lecteur de transpondeurs selon la revendication 1, dans lequel
- ledit lecteur (101) de transpondeurs comporte un moyen pour juger quel est celui desdits au moins deux protocoles de signalisation de transpondeurs différents que ledit transpondeur utilise en répondant audit premier signal analogique, et un moyen pour utiliser ledit protocole.

17. Lecteur de transpondeurs selon la revendication 16, dans lequel
- ledit jugement est réalisé lors d'une séquence de démarrage et ledit lecteur (101) de transpondeurs est conçu pour supposer que tous les transpondeurs fonctionnent suivant ledit protocole détecté.

18. Lecteur de transpondeurs selon la revendication 1, comprenant en outre un moyen permettant à un opérateur de choisir le protocole de signalisation de transpondeurs qui convient.

19. Lecteur de transpondeurs selon la revendication 4, dans lequel
- ledit lecteur (101) de transpondeurs comporte un moyen pour établir des caractéristiques d'antenne en fonction de caractéristiques d'ambiance détectée de façon à parvenir à une qualité optimale de détection de signalisation par rapport à l'environnement électromagnétique.

20. Lecteur de transpondeurs selon la revendication 9, comprenant en outre un moyen pour commander la phase dudit premier signal analogique.

21. Procédé destiné à servir dans un lecteur (101) de transpondeurs pour lire des données provenant de transpondeurs, dans lequel chacun desdits transpondeurs envoie des données suivant un protocole parmi un certain nombre de protocoles de signalisation de transpondeurs, le procédé comprenant les étapes corisistant à :
- envoyer, depuis ledit lecteur (101) de transpondeurs, un premier signal analogique à l'un desdits transpondeurs et recevoir, dans ledit lecteur (101) de transpondeurs, un second signal analogique provenant desdits transpondeurs à l'aide d'un moyen formant antenne (201, 301, 401), et
- analyser, dans ledit lecteur (101) de transpondeurs, ledit second signal analogique reçu par ledit moyen formant antenne (201, 301, 401),
**caractérisé en ce qu'**il comprend en outre les étapes consistant à:
- convertir, dans ledit lecteur (101) de transpondeurs, ledit second signal analogique dans le domaine analogique en un premier signal numérique dans le domaine numérique,
- fournir, dans ledit lecteur (101) de transpondeurs, ledit premier signal numérique à un moyen de traitement numérique, et
- analyser, dans ledit lecteur de transpondeurs, ledit premier signal numérique reçu en utilisant ledit moyen de traitement numérique (102, 202, 302, 402) pour établir ceux d'au moins deux protocoles de signalisation de transpondeurs différents qu'utilise ledit transpondeur,
- choisir, dans ledit lecteur (101) de transpondeurs, celui desdits au moins deux protocoles de signalisation de transpondeurs différents qui a été établi, et
- analyser, dans ledit lecteur (101) de transpondeurs, ledit premier signal numérique suivant ledit protocole de signalisation de transpondeurs choisi.

22. Procédé selon la revendication 21, dans lequel ladite étape d'analyse consiste à démoduler, détecter et décoder des signaux numériques suivant un premier et au moins un second protocoles de signalisation de transpondeurs.

23. Procédé selon la revendication 21 ou 22, comprenant en outre l'étape consistant à envoyer, dans ledit lecteur de transpondeurs, ledit premier signal numérique analysé à un moyen de post-traitement.

24. Procédé selon la revendication 21, dans lequel
- ledit moyen formant antenne comporte un moyen pour commander les caractéristiques de l'antenne,
- ledit moyen formant antenne comporte une interface numérique pour recevoir des messages numériques dudit moyen de traitement numérique et pour émettre des messages numériques vers ledit moyen de traitement numérique, et
**caractérisé par** les étapes consistant en outre à
- commander lesdites caractéristiques de l'antenne en fonction desdits messages numériques reçus, et
- émettre vers ledit moyen de traitement numérique des messages numériques concernant les caractéristiques de l'antenne, depuis ledit moyen formant antenne.

25. Procédé selon la revendication 24, dans lequel lesdits messages numériques contiennent des informations choisies dans le groupe d'informations comportant : antenne prête à envoyer, antenne en ligne, amplification de sortie et coefficients d'accord de fréquence.

26. Procédé selon l'une quelconque des revendications 21 à 25, dans lequel
- chacun desdits au moins deux protocoles est choisi dans le groupe de protocoles comprenant : des protocoles en semi-duplex, des protocoles en duplex intégral, des protocoles d'entreprise (protocole B) et des protocoles de lecture/écriture.

27. Procédé selon l'une quelconque des revendications 21 à 26, comprenant en outre les étapes consistant à
- fournir des seconds signaux numériques, depuis ledit moyen de traitement numérique, à un convertisseur numérique-analogique pour convertir ledit signal numérique en ledit premier signal analogique,
- fournir ledit premier signal analogique, depuis ledit convertisseur numérique-analogique, audit moyen formant antenne pour l'émettre.

28. Procédé selon la revendication 21, dans lequel
- ledit moyen de traitement numérique comporte un moyen pour démoduler ledit premier signal numérique suivant une première et au moins une seconde méthodes de démodulation.

29. Procédé selon la revendication 28, dans lequel
- ledit moyen de traitement numérique comporte un moyen pour la détection de symboles à partir dudit signal numérique démodulé, suivant une première et au moins une seconde méthodes de détection de symboles.

30. Procédé selon la revendication 29, dans lequel
- ledit moyen de traitement numérique comporte un moyen pour décoder des symboles parmi lesdits symboles détectés, suivant une première et au moins une seconde méthodes de décodage de symboles.

31. Procédé selon la revendication 30, dans lequel
- ledit décodage comporte ou est constitué par l'exécution d'un contrôle de détection d'erreur, par exemple par contrôle de redondance cyclique.

32. Procédé selon la revendication 30, comportant les étapes consistant à :
- détecter, dans ledit lecteur de transpondeurs, celui desdits premier et au moins second moyens de démodulation, détection et décodage qui produit la meilleure qualité de détection de signaux, et à utiliser ledit moyen.

33. Procédé selon la revendication 30, dans lequel
- un opérateur choisit celui des moyens de démodulation, détection et décodage qui doit être utilisé par ledit moyen de traitement numérique.

34. Procédé selon la revendication 21, dans lequel
- ledit un d'au moins deux protocoles de signalisation de transpondeurs différents est un protocole en duplex intégral et est **caractérisé par** les étapes supplémentaires consistant à :
- soustraire, dans ledit lecteur de transpondeurs, ledit premier signal analogique dudit second signal analogique afin de supprimer la contribution du premier signal analogique à la réception dudit second signal analogique.

35. Procédé selon la revendication 34, comprenant l'étape consistant à :
- renforcer, dans ledit lecteur de transpondeurs, ledit premier signal analogique avant de soustraire ledit premier signal analogique dudit second signal analogique.

36. Procédé selon la revendication 21, comprenant l'étape consistant à :
- juger, dans ledit lecteur de transpondeurs, de celui d'au moins lesdits deux protocoles de signalisation de transpondeurs différents qu'utilise ledit transpondeur en répondant audit premier signal analogique, et utiliser ledit protocole.

37. Procédé selon la revendication 36, comprenant l'étape consistant à :
- réaliser ledit jugement lors d'une séquence de démarrage et supposer que tous les transpondeurs fonctionnent suivant ledit protocole détecté.

38. Procédé selon la revendication 21, dans lequel
- un opérateur choisit le protocole de signalisation de transpondeurs qui convient.

39. Procédé selon la revendication 24, comprenant l'étape consistant à :
- établir des caractéristiques de l'antenne en fonction de caractéristiques d'ambiance détectées de manière à réaliser une qualité optimale de détection de signalisation en fonction de l'environnement électromagnétique.

40. Procédé selon la revendication 24, comprenant en outre l'étape consistant à commander la phase dudit premier signal analogique.
